# EUROPÄISCHE PATENTSCHRIFT

(11) **EP 1 749 770 B1**
(45) Veröffentlichungstag und Bekanntmachung des Hinweises auf die Patenterteilung: **23.12.2009**
(21) Anmeldenummer: 06405328.3
(22) Anmeldetag: 31.07.2006
(51) Int. Cl.: B65G 69/18

(54) **Ventilvorrichtung zum Kuppeln von Behältnissen**
Valve device for connecting vessels
Dispositif de soupape pour relier des conteneurs

(30) Priorität: 04.08.2005 CH 12932005
(43) Veröffentlichungstag der Anmeldung: 07.02.2007
(73) Patentinhaber: Zermec GmbH, 5080 Laufenburg (CH)
(72) Erfinder: Knecht, Stefan, 5080 Laufenburg (CH); Knecht, Michael, 5326 Schwaderloch (CH)
(74) Vertreter: Alder, Hans Rudi

(56) Entgegenhaltungen:
- DE-C1- 10 004 695
- US-A- 5 794 647

## Beschreibung

### Technisches Gebiet

Die Erfindung betrifft eine Vorrichtung zum Kuppeln von Behältnissen gemäss dem Oberbegriff des unabhängigen Patentanspruchs 1 sowie eine Schliessklappe für die erfindungsgemässe Vorrichtung.

### Stand der Technik

Solche Vorrichtungen zum Kuppeln von Behältnissen können unter anderem bei der Befüllung oder allgemein beim Transfer von gasförmigen, fliessfähigen oder rieselfähigen Füllmedien zwischen Behältern, wie sie beispielsweise in der chemischen Industrie verwendet werden, eingesetzt werden.

Zum Transfer von Füllmedien zwischen zwei Behältern unter Verwendung solcher Vorrichtungen werden Kupplungsstutzen, die jeweils direkt am Behälter befestigt oder indirekt mit dem Behälter verbunden sein können, beispielsweise über Rohre oder ähnliches, mit jeweils einer verriegelten und dicht geschlossenen Schliessklappe so zueinander positioniert, dass die Schliessklappen aneinander anliegen. Die Kupplungsstutzen werden miteinander verbunden und die Schliessklappen werden um die gemeinsame Achse gedreht, bis sie sich jeweils in einer geöffneten Kippstellung befinden. Die beiden Kupplungsstutzen und somit die beiden Behälter stehen nun geöffnet zueinander und der Transfer eines Füllmediums von einem Behälter in den anderen kann stattfinden. Nach dem Transfer werden die Schliessklappen wieder in die geschlossene Kippstellung gedreht, verriegelt und die beiden Kupplungsstutzen werden wieder voneinander gelöst.

Aus der EP 1 315 662 B1 und der EP 1 313 658 B1 sind beispielsweise Vorrichtungen bekannt, die jeweils zwei Kupplungsstutzen mit jeweils einer Schliessklappe aufweisen, die wiederum jeweils zwei entgegengesetzt angeordneten Achszapfen umfassen. Einer der jeweils vier Achszapfen der Vorrichtungen ist dabei so ausgebildet, dass ein Drehantrieb eine Kraft daran anbringen kann, womit die Schliessklappen gekippt werden können.

Da die oben beschreibenen Vorrichtungen insbesondere auch für den Transfer von reaktiven, toxischen und anderen kritischen Füllmedien verwendet werden, haben sie hohen Anforderungen an Dichtheit zu erfüllen. Unter anderem kann die Dichtheit der Lager der Achszapfen während des Transfers des Füllmediums einerseits und während der verschlossenen Kippstellung der Schliessklappen andererseits problematisch sein. Die meist verhältnismässig weich beschaffenen, chemisch nicht sehr resistenten Dichtungsmaterialien, die zum Abdichten der Schliessklappen, der Achszapfen und der Teller eingesetzt werden, können insbesondere bei häufiger Verwendung partiell beschädigt oder beispielsweise durch Aufquellen verformt werden, so dass Undichtheiten in der Vorrichtung und insbesondere im Lagerbereich der Achszapfen entstehen können, bzw. so dass sich die Kupplungsstutzen nicht mehr korrekt schliessen lassen.

Bei verbundenen Kupplungsstutzen kann ein weiterer problematischer Aspekt das Eindringen von Füllmedium zwischen die beiden Schliessklappen sein. Damit so eingedrungenes Füllmedium nach dem Loslösen der Kupplungsstutzen nicht auslaufen kann, werden die Kupplungsstutzen typischerweise erst nur leicht angelöst, um den Zwischenraum zwischen den beiden Schliessklappen, beispielsweise mittels Absaugen oder Ausspülen, zu reinigen. Erst danach werden die Schliessklappen dann vollständig voneinander abgelöst.

Die Schliessklappen solcher Vorrichtungen stehen jeweils zumindest zeitweise und zumindest teilweise in Kontakt mit dem Füllmedium und müssen deshalb typischerweise aus einem je nach Anwendung chemisch resistenten bzw. hygienisch unproblematischen Material hergestellt sein. Andererseits wirken Kräfte zum Öffnen und Schliessen der Kupplungsstutzen an den Schliessklappen, die aus Gründen der oben erwähnten Dichtheitsanforderungen typischerweise relativ gross sein müssen. Das bedeutet, dass das Material aus dem die Schliessklappen hergestellt sind, gleichzeitig auch noch mechanisch beanspruchbar sein muss.

Diese verschiedenen Anforderungen an das Material der Schliessklappen führt dazu, dass sowohl verhältnismässig teure Materialien eingesetzt werden, als auch Kompromisse entweder bezüglich der mechanischen Beanspruchbarkeit oder der chemischen Resistenz bzw. der hygienischen Verträglichkeit eingegangen werden müssen. Typischerweise werden teure, mechanisch nicht befriedigend beanspruchbare Materialien eingesetzt, so dass die teuren Schliessklappen nach einer bestimmten Nutzung beschädigt sind und ersetzt werden müssen.

Eine Vorrichtung zum Kuppeln vor Behältnissen gemäss dem Oberbegriff von Patentanspruch 1 ist aus der DE 100 04 695 bekannt.

Der vorliegenden Erfindung liegt die Aufgabe zu Grunde, eine verbesserte Vorrichtung zum Kuppeln von Behältnissen mit mechanisch beanspruchbaren Schliessklappen vorzuschlagen, die in Bezug auf das Füllmedium vorteilhafte Eigenschaften aufweisen und gleichzeitig kostengünstig wartbar sind.

### Offenbarung der Erfindung

Die Aufgabe wird erfindungsgemäss durch eine Vorrichtung zum Kuppeln von Behältnissen gelöst, wie sie im unabhängigen Patentanspruch 1 definiert ist. Vorteilhafte Ausführungsvarianten der erfindungsgemässen Vorrichtung ergeben sich aus den abhängigen Patentansprüchen.

Das Wesen der Erfindung besteht im Folgenden: Eine Vorrichtung zum Kuppeln von Behältnissen mit jeweils einer Öffnung umfasst einen mit der Öffnung des einen Behältnisses dicht verbindbaren ersten Kupplungsstutzen und einen mit der Öffnung des anderen Behältnisses dicht verbindbaren zweiten Kupplungsstutzen, wobei die Vorrichtung eine kippbar am ersten Kupplungsstutzen angeordnete erste Schliessklappe umfasst, die in einer geschlossenen Kippstellung den ersten Kupplungsstutzen dicht abschliesst, und eine kippbar am zweiten Kupplungsstutzen angeordnete zweite Schliessklappe, die in einer geschlossenen Kippstellung den zweiten Kupplungsstutzen dicht abschliesst. Die beiden Schliessklappen umfassen jeweils einen Teller und jeweils mindestens einen radial am Teller angeordneten Achszapfen zum kippbaren Lagern der Schliessklappe. Die Vorrichtung umfasst Mittel zum Verbinden der beiden Kupplungsstutzen mit aneinander anliegenden Schliessklappen, so dass die beiden Schliessklappen um eine gemeinsame Achse kippbar sind. Die beiden Schliessklappen sind jeweils so ausgestaltet, dass der mindestens eine Achszapfen abnehmbar am Teller angebracht ist. Solche Schliessklappen ermöglichen es, die Achszapfen aus einem Material herzustellen, das auf die mechanischen Anforderungen für das Öffnen und Schliessen der Schliessklappe hin optimiert ist, und das verhältnismässig kostengünstig ist, und gleichzeitig den Teller aus einem chemisch resistenten bzw. hygienisch unproblematischen Material herzustellen. Wird einer oder mehrere der Achszapfen der beiden Schliessklappen im Betrieb der Vorrichtung beschädigt, beispielsweise durch unsachgemässe mechanische Beanspruchung, so kann jeder dieser Achszapfen einzeln ausgetauscht werden, ohne dass der dazugehörige Teller, der typischerweise verhältnismässig teuer ist, mitausgetauscht werden muss.

Der jeweilige mindestens eine Achszapfen der beiden Schliessklappen umfasst, einen Schaft und der jeweilige Teller der beiden Schliessklappen mindestens einen Aufnahmeteil mit einem im Wesentlichen komplementär zum Schaft ausgebildeten Schaftloch, welches derart ausgebildet ist, dass die Wandung des Schaftlochs bei in das Schaftloch eingeführten Schaft den Schaft in Umfangsrichtung vorschliesst. Eine solche Ausgestaltung des Achszapfens und des Tellers ermöglicht eine stabile und exakt vordefinierte formschlüssig Verbindung zwischen Achszapfen und Teller, wobei der Achszapfen einfach und reversibel mit dem Teller verbunden werden kann.

Mit Vorteil weist der jeweilige mindestens eine Achszapfen der beiden Schliessklappen in axialer Richtung mindestens ein durchgehendes Schraubenloch auf und der jeweilige mindestens eine Aufnahmeteil der beiden Schliessklappen mindestens ein Innengewinde, über welches der Achszapfen mit jeweils mindestens einer Schraube am jeweiligen Teller der beiden Schliessklappen festschraubbar ist. Der festgeschraubte Achszapfen minimiert die Wahrscheinlichkeit eines unbeabsichtigten Loslösens des Achszapfens vom Teller.

Vorzugsweise weist der jeweilige Teller der beiden Schliessklappen und der jeweilige mindestens eine Achszapfen der beiden Schliessklappen jeweils eine flache Kupplungsseite auf, die im Wesentlichen in einer Ebene liegen. So ausgestaltete Schliessklappen lassen sich in einer erfindungsgemässen Vorrichtung verhältnismässig einfach aneinander anliegend miteinander verbinden.

In einer bevorzugten Ausführungsvariante sind entlang des Randes des jeweiligen Tellers der beiden Schliessklappen und an der Kupplungsseite dieses Tellers beginnend und endend, um die Aussenseite des Schaftlochs des jeweiligen mindestens einen Aufnahmeteils herum, Dichtungsrinnen angeordnet, die mit Dichtungen ausgestattet sind, welche die Dichtungsrinnen überragen. Solche am Teller angeordneten Dichtungsrinnen mit Dichtungen ermöglichen einerseits ein effektives Abdichten des entsprechenden Kupplungsstutzens bei einer Schliessklappe in geschlossener Kippstellung, wobei die Innenseite des Kupplungsstutzen selbst keine Dichtung aufweisen muss, und andererseits ein effektives Abdichten des Lagerungsbereichs der Achszapfen in jeder Kippstellung. Dabei muss gleichzeitig verhältnismässig wenig Dichtungsmaterial eingesetzt werden, was einerseits die Verwendung eines hochwertigen verhältnismässig teuren Dichtungsmaterials erlaubt, wie beispielsweise Perfluorkautschuk oder Elastomere, und andererseits eine einfache Wartung ermöglicht. Falls trotz des allenfalls verwendeten hochwertigen Dichtungsmaterials ein Aufquellen stattfindet, ist dieses dank dem kleinen Volumen der Dichtungen verhältnismässig gering, so dass ein Blockieren der Schliessklappen verhindert werden kann. Solche mit Dichtungen ausgestattete Dichtungsrinnen sind auch bei Schliessklappen in einer Vorrichtung zum Kuppeln von Behältnissen einsetzbar, bei welcher die Achszapfen der Schliessklappe nicht abnehmbar am Teller angeordnet sind.

Vorzugsweise umfasst der Teller mindestens einer der beiden Schliessklappen auf der Kupplungsseite eine entlang des Rands des Tellers verlaufende Dichtungrinne, die mit einer Dichtung ausgestattet ist, welche die Dichtungsrinne überragt. Mit einer solchen Dichtung können die beiden Schliessklappen bei verbundenen Kupplungsstutzen ausreichend dicht aneinander anliegen, so dass kein Füllmedium zwischen die beiden Schliessklappen gelangen kann und somit ein Ausspülen bzw. Absaugen des Raums zwischen den beiden Schliessklappe beim Loslösen der beiden Kupplungsstutzen unnötig ist.

Mit Vorteil weist die eine der beiden Schliessklappen auf ihrer Kupplungsseite mindestens einen Positionierbolzen auf und die andere der beiden Schliessklappen auf ihrer Kupplungsseite mindestens ein entsprechendes Bolzenloch, so dass bei aneinander anliegenden Schliessklappen der mindestens eine Positionierbolzen in das entsprechende Bolzenloch ragt und die Schliessklappen zueinander positioniert. Auf diese Weise lassen sich die beiden Schliessklappe ausreichend genau positioniert miteinander verbinden, so dass ein sauberes vordefiniertes Kippen der Schliessklappen bei verbundenen Kupplungsstutzen gewährleistet ist.

Vorzugsweise weist die Vorrichtung ein an die Kupplungsseite der Schliessklappe mit dem mindestens einen Positionierbolzen angrenzendes Vakuumloch auf, das durchgehend durch den Teller und den Achszapfen der Schliessklappe mit dem mindestens einen Positionierbolzen ausgestaltet ist. Mit einem solchen Vakuumloch kann beim Verbinden der beiden Kupplungsstutzen ein Unterdruck bzw. ein Vakuum zwischen den beiden Schliessklappen erzeugt werden, womit die beiden Schliessklappen aneinander gepresst werden und womit auch die Dichtheit der Verbindung der beiden Schliessklappen nochmals verbessert werden kann.

Mit Vorteil weisen die jeweiligen Achszapfen der beiden Schliessklappen einen zylindersegmentförmigen Kippbereich und die beiden Kupplungsstutzen jeweils mindestens eine zylindersegmentförmige Aussparung zur Aufnahme des entsprechenden Kippbereichs auf. Solche Kippbereiche im Zusammenwirken mit solchen Aussparungen sind eine einfach Ausgestaltung, um ein sauberes Kippen der Schliessklappen zu ermöglichen.

Vorzugsweise weisen die beiden Kupplungsstutzen auf ihren Aussenseiten jeweils eine kreissegmentförmige Führungsnut um die Aussparung herum auf, in die jeweils ein Vorsprung des entsprechenden Achszapfens greift. Damit ist eine kontrolliert geführte Kippbewegung der Schliessklappe gewährleistet und die Achszapfen sind gegen ein unbeabsichtigtes Loslösen von den Kupplungsstutzen gesichert. Die Achszapfen können dabei ausschliesslich durch die Führungsnut geführt sein, ohne dass ihr Kippbereich an der entsprechenden Aussparung des Kupplungsstutzens anliegt.

Mit Vorteil ist an der Innenseite der Kupplungsstutzen jeweils eine Schutzauskleidung angeordnet, die die Innenseite des zugehörigen Kupplungsstutzens durchgehend abdeckt. Die Schutzauskleidung ist vorzugsweise aus einem chemisch resistenten bzw. hygienisch problemlosen Material, wie beispielsweise Polytetrafluorethylen (PTFE), hergestellt und schützt den Kupplungsstutzen vor dem Füllmedium und umgekehrt. Damit kann der Kupplungsstutzen aus einem Material hergestellt werden, welches unabhängig von den Eigenschaften des Füllmediums ist.

Vorzugsweise weist die Schutzauskleidung auf ihrem dem jeweils anderen Kupplungsstutzen zugewandten Rand eine Dichtungsrinne auf, die mit einer Dichtung ausgestattet ist, welche die Dichtungsrinne überragt. So können die beiden Schutzauskleidungen der beiden verbundenen Kupplungsstutzen dicht miteinander verbunden werden, so dass kein Füllmedium dazwischen austreten kann. Dies ist insbesondere vorteilhaft, wenn die Schutzauskleidungen aus einem wenig flexiblen, zum Dichten wenig geeigneten Material hergestellt ist.

In einer weiteren bevorzugten Ausführungsvariante umfasst der zweite Kupplungsstutzen mindestens einen Riegel mit einem Verschlussvorsprung, der mindestens eine Achszapfen der zweiten Schliessklappe weist eine Verschlussaufnahme auf und der zweite Kupplungsstutzen und der mindestens eine Riegel weisen Riegelführungsmittel auf, die den mindestens einen Riegel in eine Schliessrichtung drücken. Die Verschlussaufnahme und der Verschlussvorsprung sind so angeordnet, dass der mindestens eine Riegel bei geschlossener Kippstellung der zweiten Schliessklappe in Schliessrichtung verschoben ist, so dass der Verschlussvorsprung in die Verschlussaufnahme greift. Damit lässt sich die Schliessklappe auf einfache Weise in geschlossener Kippstellung verriegeln, was ein unbeabsichtigtes Öffnen eines der Kupplungsstutzen und ein unbeabsichtigtes Austreten von Füllmedium aus dem Behältnis bei unverbundenen Kupplungsstutzen verhindert. Eine derart ausgestaltete Verriegelung lässt sich auch in einer Vorrichtung zum Kuppeln von Behältnissen realisieren, bei welcher Achszapfen der Schliessklappe nicht abnehmbar am Teller angeordnet sind.

Vorzugsweise ist der mindestens eine Achszapfen der ersten Schliessklappe fest mit einem Mitnehmer verbunden, der einen zylinderförmigen Zylinderbereich aufweist. Der zweite Kupplungsstutzen weist mindestens eine komplementär zum Zylinderbereich ausgestaltete Mitnehmeraufnahme auf, in welcher bei verbundenem ersten und zweiten Kupplungsstutzen der Zylinderbereich angeordnet ist. Der mindestens eine Riegel weist eine Mitnehmeraufnahme auf, in welcher beim Verbinden des ersten und zweiten Kupplungsstutzens der Zylinderbereich angeordnet ist, und über welche der Riegel entgegen der Schliessrichtung bewegbar ist. Somit werden einerseits die Schliessklappen bei verbundenen Kupplungsstutzen automatisch entriegelt, so dass die Schliessklappen geöffnet werden können, und andererseits werden die Schliessklappen beim Loslösen der Kupplungsstutzen automatisch in ihrer geschlossenen Kippstellung verriegelt.

Ein weiterer Aspekt der Erfindung betriff eine Schliessklappe, die in einer vorgehend beschriebenen Vorrichtung zum Kuppeln von Behältnissen einsetzbar ist.

Ein anderer weiterer Aspekt der Erfindung betrifft einen Achszapfen, der in einer vorgehend beschriebenen Vorrichtung zum Kuppeln von Behältnissen bzw. in einer vorgehend beschriebenen Schliessklappe einsetzbar ist.

### Kurze Beschreibung der Zeichnungen

Im Folgenden wird die erfindungsgemässe Vorrichtung zum Kuppeln von Behältnissen unter Bezugnahme auf die beigefügten Zeichnungen anhand eines Ausführungsbeispiels detaillierter beschrieben.

Es zeigen:
Fig. 1 eine perspektivische Explosionsansicht von Teilen einer aktiven Schliessklappe des Ausführungsbeispiels der erfindungsgemässen Vorrichtung;
Fig. 2 eine perspektivische Ansicht der beiden Schliessklappen des Ausführungsbeispiels;
Fig. 3 eine perspektivische Explosionsansicht eines aktiven Kupplungsstutzens, eines Achszapfens und eines Mitnehmers des Ausführungsbeispiels; und
Fig. 4 eine perspektivische Explosionsansicht eines passiven Kupplungsstutzens eines Achszapfens und eines Riegels des Ausführungsbeispiels.

### Ausführungsform(en) der Erfindung

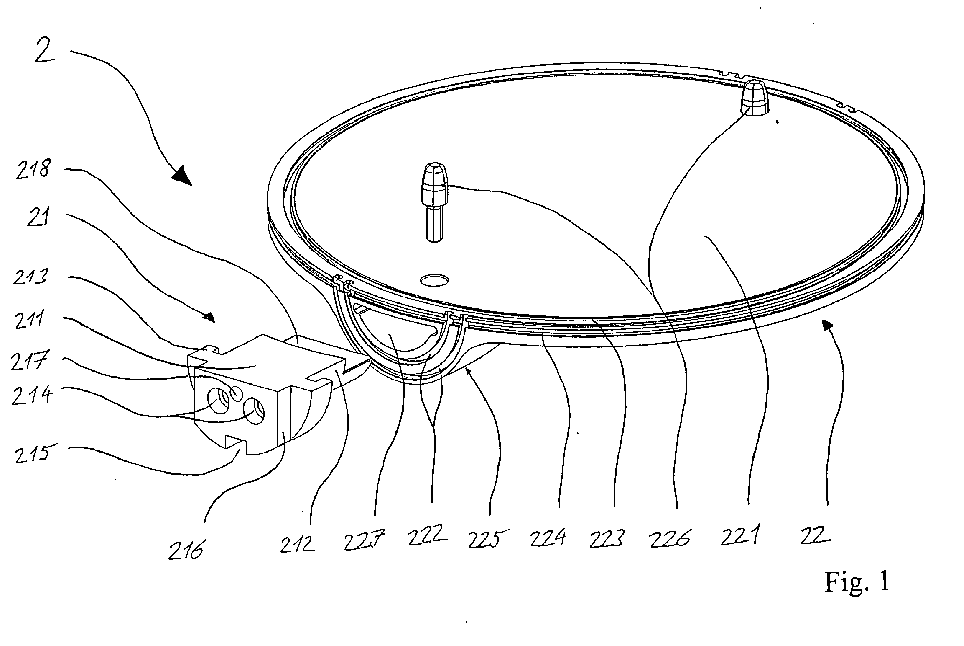

Fig. 1 zeigt einen Teller 22 und einen Achszapfen 21 einer aktiven Schliessklappe 2 des Ausführungsbeispiels der erfindungsgemässen Vorrichtung zum Kuppeln von Behältnissen. Der Achszapfen 21 ist im Wesentlichen zylindersegmentförmig ausgestaltet und umfasst gegen sein eines axiales Ende hin einen Schaft 218. Jeweils aneinander anschliessend sind ein Kippbereich 212, ein Vorsprung 213 und ein Aufsteckbereich 216 am Schaft 218 angeordnet. Der Schaft 218 und der Kippbereich 212 sind jeweils zylindersegmentförmig mit gleichem Radius ausgestaltet, wobei der Kippbereich 212 einen Halbzylinder bildet und der Schaft 218 ein kleineres Zylindersegment. Der Vorsprung 213 ist auch zylindersegmentförmig mit einem grösseren Radius ausgestaltet, wobei der Vorsprung 213 den Kippbereich 212 in axialer Richtung überragt. Die flache Seite des Kippbereichs 212, des Vorsprungs 213 und des Aufsteckbereichs 216 sind in einer Ebene angeordnet, so dass sie zusammen eine Kupplungsseite 211 bilden. Der Aufsteckbereich 216 weist zwei rechteckige senkrecht auf die Kupplungsseite 211 stehende Flächen auf. Auf der der Kupplungsseite 211 abgewandten Seite weisen der Aufsteckbereich 216 und der Vorsprung 213 eine durchgehende Verschlussaufnahme 215 auf. Der Achszapfen 21 weist weiter zwei axiale durchgehende Schraubenlöcher 214 auf und ein nicht durchgehendes axiales Mitnehmerschraubenloch 217, welches ein Innengewinde aufweist.

Der Teller 22 ist im Wesentlichen kreisscheibenförmig mit einer ebenen Kupplungsseite 221 ausgestaltet. Die Kupplungsseite 221 weist zwei nicht durchgehende Schraubenlöcher mit jeweils einem Innengewinde auf, in das jeweils ein Positionierbolzen 226 eingeschraubt bzw. einschraubbar ist. Die beiden Positionierbolzen 226 weisen jeweils einen Schraubstengel und einen konischen Kopf auf. Der Kopf überragt den Schraubstengel in radialer Richtung und bei eingeschraubten Positionierbolzen 226 steht der Kopf von der Kupplungsseite 221 ab. Auf der der Kupplungsseite 221 abgewandten Seite weist der Teller 22 zwei jeweils entgegengesetzt im radialen Endbereich des Tellers 22 angeordnete Aufnahmeteile 225 auf. Die Aufnahmeteile 225 umfassen jeweils ein im Wesentlichen komplementär zum Schaft 218 ausgebildetes Schaftloch 227 und in den axialen Endbereichen der Schaftlöcher 227 jeweils zwei Löcher mit einem Innengewinde. Die Achszapfen 21 werden am Teller 22 befestigt, indem jeweils der Schaft 218 eines Achszapfens 21 in eines der Schaftlöcher 227 eingeführt wird und über zwei durch die Schraubenlöcher 214 angeordnete Schrauben mit den Löchern des Aufnahmeteils 225 verschraubt werden.

Der Rand des Tellers 22 weist eine durchgehende umlaufende Dichtungsrinne 224 auf. Eine weitere Dichtungsrinne 223 ist auf der Kupplungsseite 221 des Tellers 22 angeordnet, die nahe und parallel zum Rand des Tellers 22 verläuft. Schliesslich sind jeweils zwei parallel angeordnete Dichtungsrinnen 222 an den beiden Aufnahmeteilen 225 ausgestaltet, die sich um die gekrümmte Seite der Schaftlöcher 227 herum bis zur Kupplungsseite 221 hin erstrecken.

Für die gesamte weitere Beschreibung gilt folgende Festlegung: Sind im unmittelbar zu einer Zeichnung zugehörigen Beschreibungstext Bezugszeichen enthalten, die in diesem Teil des Beschreibungstexts nicht erwähnt sind, so wird auf deren Erläuterung im vorangehenden Beschreibungstext Bezug genommen.

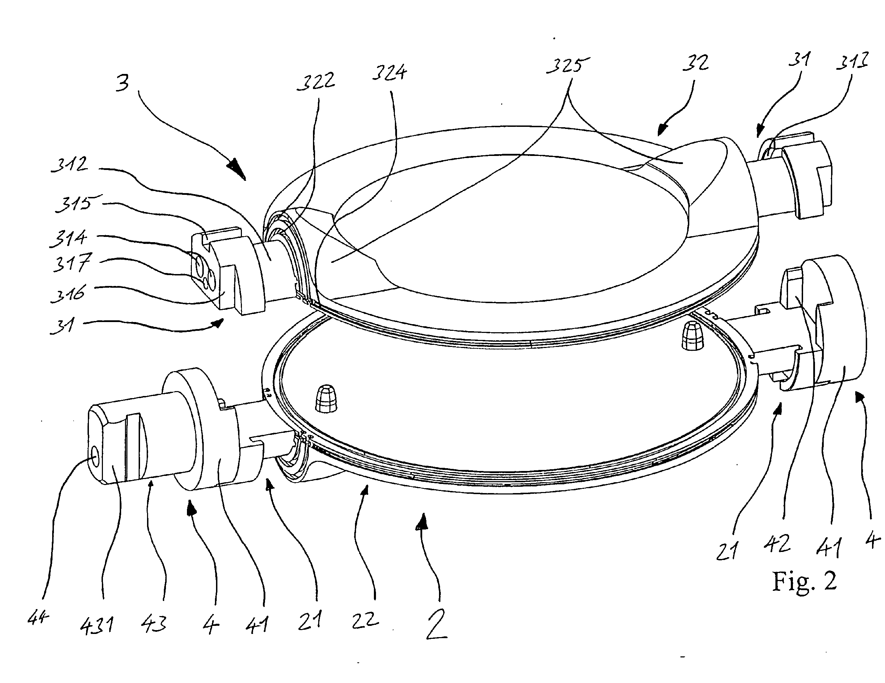

In Fig. 2 ist die aktive Schliessklappe 2 aus Fig. 1 zusammen mit einer passiven Schliessklappe 3 gezeigt. Die passive Schliessklappe 3 ist analog zur aktiven Schliessklappe 2 mit zwei Achszapfen 31 und einem Teller 32 ausgestaltet, wobei die Achszapfen 31 identisch mit den Achszapfen 21 der aktive Schliessklappe 2 sind und jeweils ebenfalls einen Schaft, einen Kippbereich 312, einen Vorsprung 313, einen Aufsteckbereich 316, eine Verschlussaufnahme 315, zwei Schraubenlöcher 314 und ein Mitnehmerschraubenloch 317 aufweisen. Der Teller 32 ist ebenfalls im Wesentlichen identisch wie der Teller 22 der aktiven Schliessklappe 2 mit einer Kupplungsseite, zwei Aufnahmeteilen 325 und Dichtungsrinnen 322, 324 ausgestaltet. Im Gegensatz zum Teller 22 der aktiven Schliessklappe 2 umfasst der Teller 32 zwei im wesentlichen komplementär zu den Köpfen der Positionierbolzen 226 ausgestaltete und angeordnete Bolzenlöcher auf der Kupplungsseite (in Fig. 2 nicht ersichtlich) und keine Dichtungsrinne auf der Kupplungsseite.

An den beiden Achszapfen 21 der aktiven Schliessklappe 2 ist jeweils ein Mitnehmer 4 angeordnet der einen zylinderförmigen Zylinderbereich 41 umfasst, welcher den gleichen Radius aufweist wie der Vorsprung 213 des Achszapfens 21, und eine Aufstecknut 42. Die Aufstecknut 42 ist gegen seine Enden hin aufgeweitet und weist eine Breite und Tiefe auf, die der Breite und Tiefe des Aufsteckbereichs 216 des Achszapfens 21 entspricht. Die beiden Mitnehmer 4 weisen jeweils ein durchgehendes Befestigungsschraubenloch 44 auf, über welches der Mitnehmer 4 mit dem Mitnehmerschraubenloch 217 des entsprechenden Achszapfens 21 fest verschraubt ist. Einer der beiden Mitnehmer 4 ist als Antriebsmitnehmer ausgestaltet und weist zusätzlich ein Antriebselement 43 mit einem Antriebsaufsteckmittel 431 auf.

Beim Verbinden der aktiven Schliessklappe 2 mit der passiven Schliessklappe 3 werden die Aufsteckbereiche 316 der beiden Achszapfen 31 über die aufgeweiteten Enden der entsprechenden Aufstecknuten 42 der Mitnehmer 4 vorzentriert und in die Aufstecknuten 42 eingeführt. Dabei werden auch die Positionierbolzen 226 in die Bolzenlöcher (in Fig. 2 nicht ersichtlich) eingeführt und somit die Schliessklappen 2, 3 exakt zueinander positioniert. Zwei so verbundene Schliessklappen 2, 3 bilden eine kompakte exakt zueinander positionierte Einheit mit einer gemeinsamen Kippachse, welche durch die vier Achszapfen 21, 31 und die beiden Mitnehmer 4 verläuft. Über das Antriebsaufsteckmittel 431 kann ein Antrieb, beispielsweise ein Hebel oder eine Dreheinheit, mit dem Antriebsmitnehmer verbunden werden, welcher die beiden Schliessklappen 2, 3 um ihre gemeinsame Achse dreht. Die Drehkraft wird dabei auf alle vier Achszapfen 21, 31 übertragen, was die Beanspruchung der einzelnen Achszapfen reduziert.

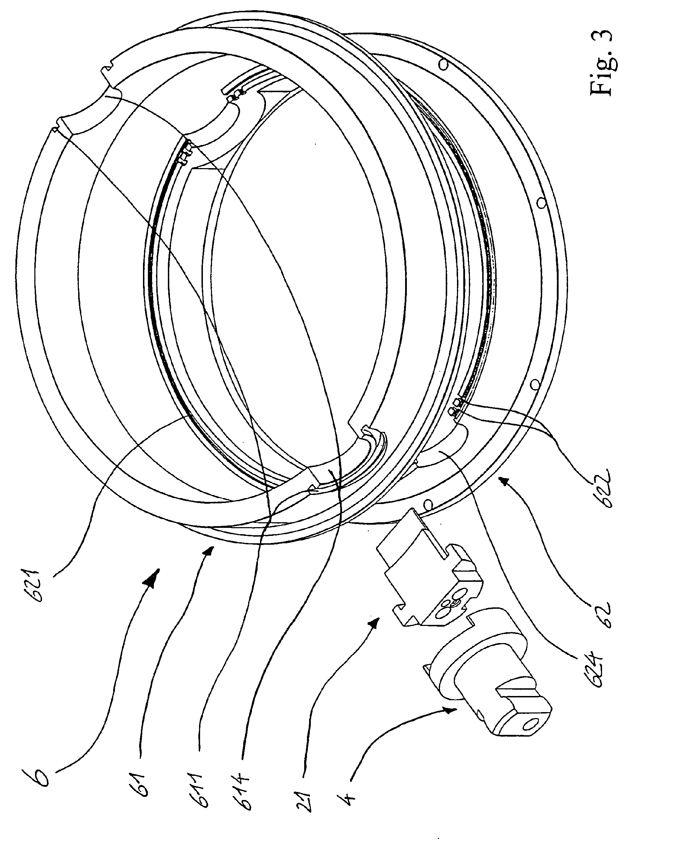

Fig. 3 zeigt einen der Achszapfen 21, den als Antriebsmitnehmer ausgestalteten Mitnehmer 4 und einen aktiven Kupplungsstutzen 6, der ein im Wesentlichen ringförmiges Gehäuse 61 und eine im Wesentlichen ringförmige Auskleidung 62 umfasst. Ein erster axialer Rand des Gehäuses 61 überragt radial den Rest des Gehäuses und ein zweiter axialer Rand des Gehäuses 61 weist zwei gegenüberliegend angeordnete zylindersegmentförmige Aussparungen 614 auf, die jeweils komplementär zum Kippbereich 212 des Achszapfens 21 ausgestaltet sind. Um die beiden Aussparungen 614 des Gehäuses 61 herum ist jeweils eine halbkreisförmige Führungsnut 611 angeordnet. Die Auskleidung 62 weist ebenfalls einen ersten axialen Rand auf, der den Rest der Auskleidung 62 radial überragt und einen zweiten axialen Rand mit entsprechend dem Gehäuse 61 ausgebildeten Aussparungen 624. Der Durchmesser der Auskleidung 62 ist so dimensioniert, dass die Auskleidung 62 exakt in das Gehäuse 61 passt, so dass sie bei zusammengestecktem Gehäuse 61 und Auskleidung 62 das Gehäuse 61 von der Innenseite her dicht abschliesst. Auf dem zweiten Rand der Auskleidung 62 ist eine Dichtungsrinne 621 angeordnet, die jeweils links und rechts der Aussparungen 624 der Auskleidung 62 zwei Dichtungsrinnendurchgänge 622 hin aufweist.

Im zusammengebauten Zustand der Vorrichung ist die Auskleidung 62 in das Gehäuse 61 gesteckt und die aktive Schliessklappe 2 ist so angeordnet, dass die Kippbereiche 212 ihrer Achszapfen 21 in den Aussparungen 614 des Gehäuses 61 und den Aussparungen 624 der Auskleidung 62 angeordnet sind, und dass die Vorsprünge 213 der Achszapfen 21 in die Führungsnuten 611 greifen. Auf diese Weise ist ein kontrolliertes rundes gesichertes Kippen der aktiven Schliessklappe 2 im aktiven Kupplungsstutzen 6 gewährleistet.

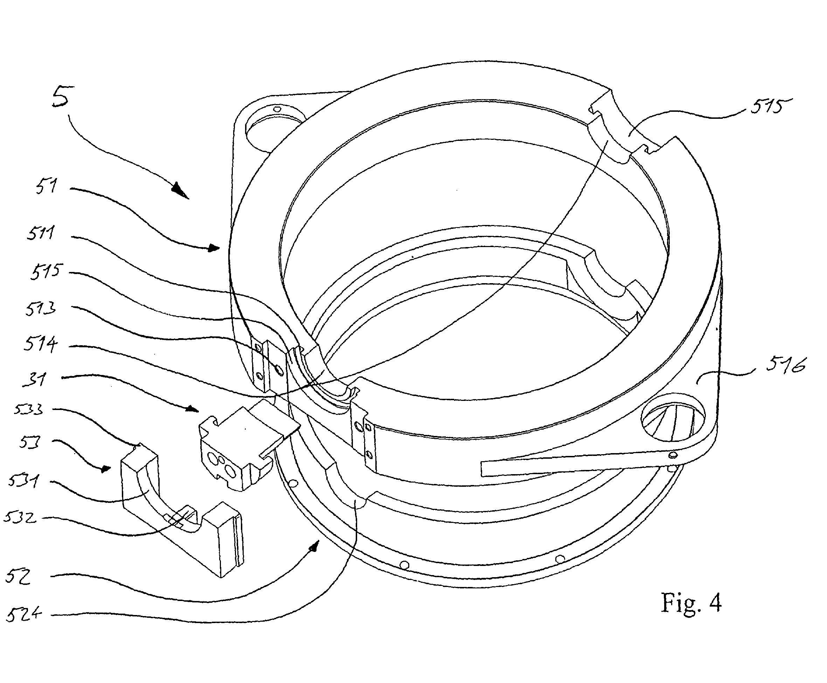

In Fig. 4 ist ein passiver Kupplungsstutzen 5 und ein entsprechender Achszapfen 31 gezeigt, wobei der passive Kupplungsstutzen 5 ein Gehäuse 51 und eine Auskleidung 52 umfasst. Die Auskleidung 52 ist im Bezug zum Gehäuse 51 entsprechend der Auskleidung 62 mit einem ersten Rand und einem zweiten Rand mit Aussparungen 524 ausgestaltet, wobei der zweite Rand keine Dichtungsrinne aufweist. Das Gehäuse 51 ist im Wesentlichen ringförmig ausgestaltet, wobei an der Aussenseite zwei gegenüberliegende Halteflügel 516 angeordnet sind. Ein zweiter axialer Rand des Gehäuses 21 weist zwei gegenüberliegend und zu den Halteflügel 516 um 90° versetzt angeordnete zylindersegmentförmige Aussparungen 514 auf, die jeweils komplementär zum Kippbereich 312 des Achszapfens ausgestaltet sind. Um die beiden Aussparungen 514 ist jeweils eine halbkreisförmige Führungsnut 511 angeordnet. Radial nach aussen an die beiden Aussparungen 514 anschliessend ist jeweils eine zylindersegmentförmige Mitnehmeraufnahme 515 angeordnet, die komplementär zum Vorsprung 313 des Achszapfens 31 und zum Zylinderbereich 41 des Mitnehmers 4 ausgestaltet ist.

An der Aussenseite des Gehäuses 51 ist ein Riegel 53 über eine Riegelführung 533 so in einer Riegelaufnahme angeordnet, dass er in axialer Richtung des Gehäuse 51 verschiebbar ist. Der Riegel 53 weist einen Verschlussvorsprung 532 und eine Entriegelungsaufnahme 531 auf, die ebenfalls komplementär zum Zylinderbereich 41 des Mitnehmers 4 ausgestaltet ist. Die Riegelaufnahme des Gehäuses 51 weist zwei Federlager 513 auf, über die Federn so mit dem Riegel 53 in Wechselwirkung bringbar sind, dass sie den Riegel 53 in Richtung des zweiten Randes des Gehäuses 51 drücken.

Im zusammengebauten Zustand der Vorrichtung ist die Auskleidung 52 in das Gehäuse 51 gesteckt. Die passive Schliessklappe 3 ist dabei so angeordnet, dass die Kippbereiche 312 ihrer Achszapfen 31 in den Aussparungen 514 des Gehäuses 51 und den Aussparungen 524 der Auskleidung 52 angeordnet sind, und dass die Vorsprünge 313 der Achszapfen 31 in die Führungsnuten 511 greifen. Auf diese Weise ist auch ein kontrolliertes rundes gesichertes Kippen der passiven Schliessklappe 3 im passiven Kupplungsstutzen 5 gewährleistet.

Befindet sich die passive Schliessklappe 3 in einer geschlossenen Kippstellung, so wird der Riegel 53 über die Federn in Richtung des zweiten Randes des Gehäuses 51 geschoben und der Verschlussvorsprung 532 rastet in die Verschlussaufnahme 315 des anliegenden Achszapfens 31 ein, was im Betrieb typischerweise beim Trennen der beiden Kupplungsstutzen 5, 6 geschieht. Damit ist die passive Schliessklappe 3 sicher verriegelt.

Beim Verbinden der beiden Schliessklappen 2, 3 kommt der Zylinderbereich 41 eines der Mitnehmer 4 in der Entriegelungsaufnahme 531 des Riegel 53 zu liegen und der Riegel 53 wird entgegen der wirkenden Federkraft verschoben. Gleichzeitig wird der Verschlussvorsprung 532 aus der Verschlussaufnahme 315 des anliegenden Achszapfens 31 gedrückt, so dass bei vollständig verbundenen Schliessklappen 2, 3 bzw. Kupplungsstutzen 5, 6 die passive Schliessklappe 3 entriegelt ist. Ein am Antriebsmitnehmer angebrachter Antrieb kann danach die beiden Schliessklappen 2, 3 kippen und damit die beiden Kupplungsstutzen 5, 6 öffnen.

In einem betriebsbereiten Zustand der vorbeschriebenen Vorrichtung ist in den Dichtungsrinnen 222, 223, 224, 322, 324, 621 und in den Dichtungsrinnendurchgängen 622 ein Dichtungsmaterial angeordnet, welches die Dichtungsrinnen jeweils überragt. Befinden sich die Schliessklappen 2, 3 in der geschlossenen Kippstellung, so wird das Dichtungsmaterial in den Dichtungsrinnen 224, 324 an die Innenseiten der Auskleidungen 52, 62 gedrückt und die Kupplungsstutzen 5, 6 sind dicht abgeschlossen. Bei verbundenen Kupplungsstutzen 5, 6 wird das Dichtungsmaterial in den Dichtungsrinnen 223, 621 gegen Kupplungsseite der passiven Schliessklappe 3 gedrückt bzw. gegen den Rand der Auskleidung 62 des aktiven Kupplungsstutzens 6. Somit werden einerseits die beiden Teller 22, 32 dicht miteinander verbunden, so dass kein Füllmedium dazwischen gelangen kann, und andererseits werden die Kupplungsstutzen 5, 6 dicht miteinander verbunden, so dass kein Füllmedium radial ausströmen kann. Die Dichtungen der Dichtungsrinnen 222, 322 treten in jeder möglichen Kippstellung der Schliessklappen 2, 3 mit den Dichtungsrinnendurchgängen 622 in Wechselwirkung, so dass der vor allem während des Kippens kritische Bereich, in dem die Achszapfen 21, 31 in den Kupplungsstutzen 5, 6 gelagert sind, durchgehend zuverlässig abgedichtet ist.

Zu der vorbeschriebenen erfindungsgemässen Vorrichtung sind weitere konstruktive Variationen realisierbar. Hier ausdrücklich erwähnt seien noch:

Einer der Positionierbolzen der aktiven Schliessklappe weist angrenzend an die Kupplungsseite ein Vakuumloch auf, welches durchgehend durch den Teller, einen der Achszapfen und einen der Mitnehmer, vorzugsweise nicht der Antriebsmitnehmer, nach aussen mündet. Beim Verbinden der beiden Schliessklappen kann über das Vakuumloch ein Unterdruck zwischen den beiden Tellern erzeugt werden, der sie verbessert aneinander drückt und sie verbessert zueinander abdichtet.

Die Vorrichtung kann durchaus auch als eine Kombination eines aktiven Kupplungsstutzens mit der zugehörigen aktiven Schliessklappe und mehreren passiven Kupplungsstutzen mit den zugehörigen passiven Schliessklappen ausgestaltet sein. Damit können mehrere passive Behältnisse mit einem aktiven Behältnis kombiniert werden, z.B. der Füllstation. Wie oben dargelegt sind dabei vorzugsweise möglichst viele Bestandteile, wie z.B. Dichtungen, Antrieb etc. am aktiven Behältnis angeordnet.

## Patentansprüche

1. Vorrichtung zum Kuppeln von Behältnissen mit jeweils einer Öffnung, die einen mit der Öffnung des einen Behältnisses dicht verbindbaren ersten Kupplungsstutzen (5, 6) und einen mit der Öffnung des anderen Behältnisses dicht verbindbaren zweiten Kupplungsstutzen (5, 6) umfasst, wobei die Vorrichtung eine kippbar am ersten Kupplungsstutzen (5, 6) angeordnete erste Schliessklappe (2, 3) umfasst, die in einer geschlossenen Kippstellung den ersten Kupplungsstutzen (5, 6) dicht abschliesst, und eine kippbar am zweiten Kupplungsstutzen (5, 6) angeordnete zweite Schliessklappe (2, 3), die in einer geschlossenen Kippstellung den zweiten Kupplungsstutzen (5, 6) dicht abschliesst, wobei die beiden Schliessklappen (2, 3) jeweils einen Teller (22, 32) umfassen und jeweils mindestens einen radial am Teller (22, 32) angeordneten Achszapfen (21, 31) zum kippbaren Lagern der Schliessklappe (2, 3), wobei die Vorrichtung Mittel zum Verbinden der beiden Kupplungsstutzen (5, 6) mit aneinander anliegenden Schliessklappen (2, 3) umfasst, so dass die beiden Schliessklappen (2, 3) um eine gemeinsame Achse kippbar sind, wobei die beiden Schliessklappen (2, 3) jeweils so ausgestaltet sind, dass der mindestens eine Achszapfen (21, 31) einen Schaft (218) umfasst und abnehmbar am Teller (22, 32) angebracht ist, wobei der jeweilige Teller (22, 32) der beiden Schliessklappen (2, 3) mindestens einen Aufnahmeteil (225, 325) umfasst, und wobei der Aufnahmeteil (225, 325) ein im Wesentlichen komplementär zum Schaft (218) ausgebildetes Schaftloch (227) umfasst, welches derart ausgebildet ist, dass seine Wandung bei in das Schaftloch (227) eingeführtem Schaft (218) den Schaft (218) in dessen Umfangsrichtung umschliesst, **dadurch gekennzeichnet, dass** der jeweils mindestens eine Achszapfen (21, 31) derart radial am Teller (22, 32) angeordnet ist, dass die gemeinsame Kippachse in der Ebene liegt, in der die beiden Teller (22, 32) aneinander anliegen, und dass das Schaftloch (227) derart ausgebildet ist, dass seine Wandung den eingeführten Schaft (218) in dessen Umfangsrichtung formschlüssig umschliesst.

2. Vorrichtung nach Anspruch 1, bei welcher der jeweilige mindestens eine Achszapfen (21, 31) der beiden Schliessklappen (2, 3) in axialer Richtung mindestens ein durchgehendes Schraubenloch (214, 314) aufweist und der jeweilige mindestens eine Aufnahmeteil (225, 325) der beiden Schliessklappen (2, 3) mindestens ein Innengewinde, über welches der Achszapfen (21, 31) mit jeweils mindestens einer Schraube am jeweiligen Teller (22, 32) der beiden Schliessklappen (2, 3) festschraubbar ist.

3. Vorrichtung nach Anspruch 1 oder 2, bei welcher der jeweilige Teller (22, 32) der beiden Schliessklappen (2, 3) und der jeweilige mindestens eine Achszapfen (21, 31) der beiden Schliessklappen (2, 3) jeweils eine flache Kupplungsseite (211, 221) aufweisen, die im Wesentlichen in einer Ebene liegen.

4. Vorrichtung nach Anspruch 3, bei welcher entlang des Randes des jeweiligen Tellers (22, 32) der beiden Schliessklappen (2, 3) und an der Kupplungsseite (211, 221) dieses Tellers (22, 32) beginnend und endend, um die Aussenseite des Schaftlochs (227) des jeweiligen mindestens einen Aufnahmeteils (225, 325) herum, Dichtungsrinnen (222, 224, 322, 324) angeordnet sind, die mit Dichtungen ausgestattet sind, welche die Dichtungsrinnen (222, 224, 322, 324) überragen.

5. Vorrichtung nach Anspruch 3 oder 4, bei welcher der Teller (22) mindestens einer der beiden Schliessklappen (2) auf der Kupplungsseite (221) eine entlang dem Rand des Tellers (22) verlaufende Dichtungrinne (223) umfasst, die mit einer Dichtung ausgestattet ist, welche die Dichtungsrinne (223) überragt.

6. Vorrichtung nach einem der Ansprüche 3 bis 5, bei welcher die eine der beiden Schliessklappen (2) auf ihrer Kupplungsseite (211, 221) mindestens einen Positionierbolzen (226) aufweist und die andere der beiden Schliessklappen (3) auf ihrer Kupplungsseite mindestens ein entsprechendes Bolzenloch, so dass bei aneinander anliegenden Schliessklappen (2, 3) der mindestens eine Positionierbolzen (226) in das entsprechende Bolzenloch ragt und die Schliessklappen (2, 3) zueinander positioniert.

7. Vorrichtung nach Anspruch 6, welche ein an die Kupplungsseite (211, 221) der Schliessklappe (2) mit dem mindestens einen Positionierbolzen (226) angrenzendes Vakuumloch aufweist, das durchgehend durch den Teller (22) und den Achszapfen (21) der Schliessklappe (2) mit dem mindestens einen Positionierbolzen (226) ausgestaltet ist.

8. Vorrichtung nach einem Ansprüche 1 bis 7, bei welcher die jeweiligen Achszapfen (21, 31) der beiden Schliessklappen (2, 3) einen zylindersegmentförmigen Kippbereich (212, 312) und die beiden Kupplungsstutzen (5, 6) jeweils mindestens eine zylindersegmentförmige Aussparung (514, 614) zur Aufnahme des entsprechenden Kippbereichs (212, 312) aufweisen.

9. Vorrichtung nach Anspruch 8, bei welcher die beiden Kupplungsstutzen (5, 6) auf ihren Aussenseiten jeweils eine kreissegmentförmige Führungsnut (511, 611) um die Aussparung (514, 614) herum aufweisen, in die jeweils ein Vorsprung (213, 313) des entsprechenden Achszapfens (21, 31) greift.

10. Vorrichtung nach einem der Ansprüche 1 bis 9, bei welcher an der Innenseite der Kupplungsstutzen (5, 6) jeweils eine Schutzauskleidung (52, 62) angeordnet ist, die die Innenseite des zugehörigen Kupplungsstutzens (5, 6) durchgehend abdeckt.

11. Vorrichtung nach Anspruch 10, bei welcher die Schutzauskleidung (62) auf ihrem dem jeweils anderen Kupplungsstutzen (5, 6) zugewandten Rand eine Dichtungsrinne (621) aufweist, die mit einer Dichtung ausgestattet ist, welche die Dichtungsrinne (621) überragt.

12. Vorrichtung nach einem der Ansprüche 1 bis 11, bei welcher der zweite Kupplungsstutzen (5, 6) mindestens einen Riegel (53) mit einem Verschlussvorsprung (532) umfasst, bei welcher der mindestens eine Achszapfen (21, 31) der zweiten Schliessklappe (2, 3) eine Verschlussaufnahme (215, 315) aufweist und bei welcher der zweite Kupplungsstutzen (5, 6) und der mindestens eine Riegel (53) Riegelführungsmittel (513, 533) aufweisen, die den mindestens einen Riegel, (53) in eine Schliessrichtung drücken, wobei die Verschlussaufnahme (215, 315) und der Verschlussvorsprung (532) so angeordnet sind, dass der mindestens eine Riegel (53) bei geschlossener Kippstellung der zweiten Schliessklappe (2, 3) in Schliessrichtung verschoben ist, so dass der Verschlussvorsprung (532) in die Verschlussaufnahme (215, 315) greift.

13. Vorrichtung nach Anspruch 12, bei welcher der mindestens eine Achszapfen (21, 31) der ersten Schliessklappe (2, 3) fest mit einem Mitnehmer (4) verbunden ist, der einen zylinderförmigen Zylinderbereich (41) aufweist, bei welcher der zweite Kupplungsstutzen (5, 6) mindestens eine komplementär zum Zylinderbereich (41) ausgestaltete Mitnehmeraufnahme (515) aufweist, in welcher bei verbundenem ersten und zweiten Kupplungsstutzen (5, 6) der Zylinderbereich (41) angeordnet ist, und bei welcher der mindestens eine Riegel (53) eine Mitnehmeraufnahme (531) aufweist, in welcher beim Verbinden des ersten und zweiten Kupplungsstutzens (5, 6) der Zylinderbereich (41) angeordnet ist, und über welche der Riegel (53) entgegen der Schliessrichtung bewegbar ist.

14. Schliessklappe (2, 3) für eine Vorrichtung nach einem der Ansprüche 1 bis 13, welche Schliessklappe (2, 3) einen Teller (22, 32) umfasst und mindestens einen radial am Teller (22, 32) angeordneten Achszapfen (21, 31) zum kippbaren Lagern der Schliessklappe (2, 3), welcher abnehmbar am Teller (22, 32) angebracht ist und einen Schaft (218) umfasst, wobei der Teller (22, 32) mindestens einen Aufnahmeteil (225, 325) umfasst, sowie Mittel zum Verbinden von zwei aneinander anliegenden Schliessklappen (2, 3), und wobei der Aufnahmeteil (225, 325) ein im Wesentlichen komplementär zum Schaft (218) ausgebildetes Schaftloch (227) umfasst, welches derart ausgebildet ist, dass seine Wandung bei in das Schaftloch (227) eingeführtem Schaft (218) den Schaft (218) in dessen Umfangsrichtung umschliesst, **dadurch gekennzeichnet, dass** der jeweils mindestens eine Achszapfen (21, 31) derart radial am Teller (22, 32) angeordnet ist, dass bei zwei aneinander anliegenden Schliessklappen (2, 3) die gemeinsame Kippachse in der Ebene liegt, in der die beiden Teller (22, 32) aneinander anliegen, und dass das Schaftloch (227) derart ausgebildet ist, dass seine Wandung den eingeführten Schaft (218) in dessen Umfangsrichtung formschlüssig umschliesst.

## Claims

1. Device for coupling vessels each having an opening, comprising a first coupling connector (5, 6) which can be tightly connected to the opening of the one vessel and a second coupling connector (5, 6) which can be tightly connected to the opening of the other vessel, the device comprising a first closing flap (2, 3) which is arranged tiltably on the first coupling connector (5, 6) and tightly closes off the first coupling connector (5, 6) in a closed tilting position and a second closing flap (2, 3) which is arranged tiltably on the second coupling connector (5, 6) and tightly closes off the second coupling connector (5, 6) in a closed tilting position, the two closing flaps (2, 3) each comprising a plate (22, 32) and in each case at least one axle journal (21, 31) which is arranged radially on the plate (22, 32) for tiltably mounting the closing flap (2, 3), the device comprising means for connecting the two coupling connectors (5, 6) to mutually adjoining closing flaps (2, 3), so that the two closing flaps (2, 3) are tiltable about a common axis, the two closing flaps (2, 3) each being configured in such a way that the at least one axle journal (21, 31) comprises a shank (218) and is detachably attached to the plate (22, 32), the respective plate (22, 32) of the two closing flaps (2, 3) comprising at least one receiving part (225, 325), and the receiving part (225, 325) comprising a shank hole (227) which is embodied so as to be substantially complementary to the shank (218) and is embodied in such a way that its wall encloses the shank (218), when the shank (218) is introduced into the shank hole (227), in the circumferential direction thereof, **characterised in that** the in each case at least one axle journal (21, 31) is radially arranged on the plate (22, 32) in such a way that the common tilt axis lies in the plane in which the two plates (22, 32) adjoin each other, and **in that** the shank hole (227) is embodied in such a way that its wall encloses in a form-fitting manner the introduced shank (218) in the circumferential direction thereof.

2. Device according to claim 1, wherein the in each case at least one axle journal (21, 31) of the two closing flaps (2, 3) has in the axial direction at least one continuous screw hole (214, 314) and the in each case at least one receiving part (225, 325) of the two closing flaps (2, 3) has at least one internal thread via which the axle journal (21, 31) can be securely screwed to the respective plate (22, 32) of the two closing flaps (2, 3) using in each case at least one screw.

3. Device according to claim 1 or 2, wherein the respective plate (22, 32) of the two closing flaps (2, 3) and the in each case at least one axle journal (21, 31) of the two closing flaps (2, 3) each have a flat coupling side (211, 221) lying substantially in one plane.

4. Device according to claim 3, wherein there are arranged along the edge of the respective plate (22, 32) of the two closing flaps (2, 3) and beginning and ending at the coupling side (211, 221) of this plate (22, 32), around the outside of the shank hole (227) of the in each case at least one receiving part (225, 325), sealing channels (222, 224, 322, 324) which are equipped with seals which protrude beyond the sealing channels (222, 224, 322, 324).

5. Device according to claim 3 or 4, wherein the plate (22) of at least one of the two closing flaps (2) comprises on the coupling side (221) a sealing channel (223) which extends along the edge of the plate (22) and is equipped with a seal which protrudes beyond the sealing channel (223).

6. Device according to one of claims 3 to 5, wherein the one of the two closing flaps (2) has on its coupling side (211, 221) at least one positioning bolt (226) and the other of the two closing flaps (3) has on its coupling side at least one corresponding bolt hole, so that when the closing flaps (2, 3) are adjoining each other, the at least one positioning bolt (226) protrudes into the corresponding bolt hole and positions the closing flaps (2, 3) relative to each other.

7. Device according to claim 6, which has a vacuum hole which borders the coupling side (211, 221) of the closing flap (2) with the at least one positioning bolt (226) and is configured so as to extend right through the plate (22) and the axle journal (21) of the closing flap (2) with the at least one positioning bolt (226).

8. Device according to one of claims 1 to 7, wherein the respective axle journals (21, 31) of the two closing flaps (2, 3) have a tilting region (212, 312) in the shape of a cylinder segment and the two coupling connectors (5, 6) each have at least one recess (514, 614) in the shape of a cylinder segment for receiving the corresponding tilting region (212, 312).

9. Device according to claim 8, wherein the two coupling connectors (5, 6) each have on their outsides a guide groove (511, 611) in the shape of a circle segment around the recess (514, 614), with which a respective projection (213, 313) of the corresponding axle journal (21, 31) engages.

10. Device according to one of claims 1 to 9, wherein a respective protective lining (52, 62), which continuously covers the inside of the associated coupling connector (5, 6), is arranged on the inside of the coupling connectors (5, 6).

11. Device according to claim 10, wherein the protective lining (62) has, on its edge facing the other respective coupling connector (5, 6), a sealing channel (621) which is equipped with a seal which protrudes beyond the sealing channel (621).

12. Device according to one of claims 1 to 11, wherein the second coupling connector (5, 6) comprises at least one locking bar (53) with a closure projection (532), wherein the at least one axle journal (21, 31) of the second closing flap (2, 3) has a closure receptacle (215, 315) and wherein the second coupling connector (5, 6) and the at least one locking bar (53) have locking bar guide means (513, 533) which press the at least one locking bar (53) in a closing direction, the closure receptacle (215, 315) and the closure projection (532) being arranged in such a way that the at least one locking bar (53) is displaced in the closing direction when the second closing flap (2, 3) is in the closed tilting position, so that the closure projection (532) engages with the closure receptacle (215, 315).

13. Device according to claim 12, wherein the at least one axle journal (21, 31) of the first closing flap (2, 3) is securely connected to a driver (4) having a cylindrical cylinder region (41), wherein the second coupling connector (5, 6) has at least one driver receptacle (515) which is configured in a complementary manner to the cylinder region (41) and in which the cylinder region (41) is arranged when the first and second coupling connectors (5, 6) are connected, and wherein the at least one locking bar (53) has a driver receptacle (531) in which the cylinder region (41) is arranged during connecting of the first and second coupling connectors (5, 6) and via which the locking bar (53) can be moved counter to the closing direction.

14. Closing flap (2, 3) for a device according to one of claims 1 to 13, which closing flap (2, 3) comprises a plate (22, 32) and comprises at least one axle journal (21, 31) which is radially arranged on the plate (22, 32) for tiltably mounting the closing flap (2, 3), which axle journal is detachably attached to the plate (22, 32) and comprises a shank (218), the plate (22, 32) comprising at least one receiving part (225, 325), and also means for connecting two mutually adjoining closing flaps (2, 3), and the receiving part (225, 325) comprising a shank hole (227) which is embodied in a substantially complementary manner to the shank (218) and is embodied in such a way that its wall encloses the shank (218), when the shank (218) is introduced into the shank hole (227), in the circumferential direction thereof, **characterised in that** the in each case at least one axle journal (21, 31) is radially arranged on the plate (22, 32) in such a way that when two closing flaps (2, 3) are adjoining each other, the common tilt axis lies in the plane in which the two plates (22, 32) adjoin each other, and **in that** the shank hole (227) is embodied in such a way that its wall encloses in a form-fitting manner the introduced shank (218) in the circumferential direction thereof.

## Revendications

1. Dispositif d'accouplement de conteneurs pourvus chacun d'une ouverture, qui comprend une première tubulure d'accouplement (5, 6) pouvant être reliée de façon étanche à l'ouverture de l'un des conteneurs et une seconde tubulure d'accouplement (5, 6) pouvant être reliée de façon étanche à l'ouverture de l'autre conteneur, le dispositif comprenant un premier volet de fermeture (2, 3) disposé de manière à pouvoir pivoter sur la première tubulure d'accouplement (5, 6), lequel volet, dans une position de pivotement fermée, ferme de façon étanche la première tubulure d'accouplement (5, 6), et un second volet de fermeture (2, 3) disposé de manière à pouvoir pivoter sur la seconde tubulure d'accouplement (5, 6), lequel volet, dans une position de pivotement fermée, ferme de façon étanche la seconde tubulure d'accouplement (5, 6), les deux volets de fermeture (2, 3) comprenant à chaque fois un plateau (22, 32) et, à chaque fois, au moins un tourillon (21, 31) disposé radialement sur le plateau (22, 32) et servant au montage pivotant du volet de fermeture (2, 3), le dispositif comprenant un moyen pour relier les deux tubulures d'accouplement (5 , 6) aux volets de fermeture (2 , 3) contigus de manière à ce que les deux volets de fermeture (2 , 3) puissent pivoter autour d'un axe commun, les deux volets de fermeture (2, 3) étant à chaque fois réalisés de manière à ce que l'au moins un tourillon (21, 31) comprenne une tige (218) et soit fixé de manière amovible sur le plateau (22, 32), le plateau respectif (22, 32) des deux volets de fermeture (2 , 3) comprenant au moins une partie réceptrice (225, 325) et la partie réceptrice (225, 325) comprenant un trou pour tige (227) de forme essentiellement complémentaire à la tige (218) qui est formé de manière à ce que sa paroi entoure la tige (218) dans sa direction circonférentielle lorsque la tige (218) est introduite dans le trou pour tige (227), **caractérisé par le fait que** l'au moins un tourillon respectif (21, 31) est disposé radialement sur le plateau (22, 32) de manière à ce que l'axe de pivotement commun soit situé dans le plan dans lequel les deux plateaux (22, 32) sont contigus et **par le fait que** le trou pour tige (227) est formé de manière à ce que sa paroi entoure la tige introduite (218) par conjugaison de forme dans sa direction circonférentielle.

2. Dispositif selon la revendication 1, dans lequel l'au moins un tourillon respectif (21, 31) des deux volets de fermeture (2, 3) est pourvu d'au moins un trou de vis traversant (214, 314) dans la direction axiale et l'au moins une partie réceptrice respective (225, 325) des deux volets de fermeture (2, 3) est pourvue d'au moins un filet intérieur grâce auquel le tourillon (21, 31) peut être vissé avec, à chaque fois, au moins une vis sur le plateau respectif (22, 32) des deux volets de fermeture (2, 3).

3. Dispositif selon la revendication 1 ou 2, dans lequel le plateau respectif (22, 32) des deux volets de fermeture (2, 3) et l'au moins un tourillon respectif (21, 31) des deux volets de fermeture (2, 3) possèdent à chaque fois un côté d'accouplement plat (211, 221), lesquels côtés sont situés essentiellement dans un même plan.

4. Dispositif selon la revendication 3, dans lequel des rainures d'étanchéité (222, 224, 322, 324) pourvues de garnitures d'étanchéité qui dépassent des rainures d'étanchéité (222, 224, 322, 324) bordent le plateau respectif (22, 32) des deux volets de fermeture (2, 3) et, commençant et se terminant sur le côté d'accouplement (211, 221) de ce plateau (22, 32), entourent le côté extérieur du trou pour tige (227) de l'au moins une partie réceptrice respective (225, 325).

5. Dispositif selon la revendication 3 ou 4, dans lequel le plateau (22) d'au moins un des deux volets de fermeture (2) comprend, sur le côté d'accouplement (221), une rainure d'étanchéité (223) s'étendant le long du bord du plateau (22) qui est pourvue d'une garniture d'étanchéité qui dépasse de la rainure d'étanchéité (223).

6. Dispositif selon l'une des revendications 3 à 5, dans lequel l'un des deux volets de fermeture (2) est pourvu d'au moins un goujon de positionnement (226) sur son côté d'accouplement (211, 221) et l'autre volet de fermeture (3) est pourvu d'au moins un trou pour goujon correspondant sur son côté d'accouplement, de manière à ce que, lorsque les volets de fermeture (2, 3) sont contigus, l'au moins un goujon de positionnement (223) entre dans le trou pour goujon correspondant et positionne les volets de fermeture (2, 3) l'un par rapport à l'autre.

7. Dispositif selon la revendication 6, qui comprend un trou de vide adjacent à l'au moins un goujon de positionnement (226) sur le côté d'accouplement (211, 221) du volet de fermeture (2), lequel trou est formé de manière continue à travers le plateau (22) et le tourillon (21) du volet de fermeture (2) avec l'au moins un goujon de positionnement (226).

8. Dispositif selon l'une des revendications 1 à 7, dans lequel le tourillon respectif (21, 31) des deux volets de fermeture (2, 3) comporte une zone de pivotement (212, 312) en forme de segment de cylindre et les deux tubulures d'accouplement (5, 6) comporte à chaque fois au moins un évidement (514, 614) en forme de segment de cylindre pour recevoir la zone de pivotement correspondante (212, 312).

9. Dispositif selon la revendication 8, dans lequel les deux tubulures d'accouplement (5, 6) sont pourvues à chaque fois, sur leurs côtés extérieurs, d'une rainure de guidage (511, 611) en forme de segment de cercle entourant l'évidement (514, 614), dans laquelle une saillie (213, 313) du tourillon correspondant (21, 31) s'engage à chaque fois.

10. Dispositif selon l'une des revendications 1 à 9, dans lequel les tubulures d'accouplement (5, 6) sont pourvues à chaque fois, sur leur côté intérieur, d'une garniture de protection (52, 62) qui couvre de manière continue le côté intérieur de la tubulure d'accouplement associée (5, 6).

11. Dispositif selon la revendication 10, dans lequel la garniture de protection (62) est pourvue, sur son bord tourné vers l'autre tubulure d'accouplement respective (5, 6), d'une rainure d'étanchéité (621) qui est pourvue d'une garniture d'étanchéité qui dépasse de la rainure d'étanchéité (621).

12. Dispositif selon l'une des revendications 1 à 11, dans lequel la seconde tubulure d'accouplement (5, 6) comprend au moins un verrou (53) pourvu d'une saillie d'enclenchement (532), dans lequel l'au moins un tourillon (21, 31) du second volet de fermeture (2, 3) comporte un logement d'enclenchement (215, 315) et dans lequel la seconde tubulure d'accouplement (5, 6) et l'au moins un verrou (53) sont pourvus de moyens de guidage de verrou (513, 533) qui pressent l'au moins un verrou (53) dans une direction de fermeture, le logement d'enclenchement (215, 315) et la saillie d'enclenchement (532) étant disposés de manière à ce que l'au moins un verrou (53) soit poussé dans la direction de fermeture lorsque le second volet de fermeture (2, 3) est dans la position de pivotement fermée, de sorte que la saillie d'enclenchement (532) s'engage dans le logement d'enclenchement (215, 315).

13. Dispositif selon la revendication 12, dans lequel l'au moins un tourillon (21, 31) du premier volet de fermeture (2, 3) est relié fixement à un entraîneur (4) qui comporte une zone de cylindre (41) cylindrique, dans lequel la seconde tubulure d'accouplement (5, 6) est pourvue d'au moins une partie réceptrice d'entraîneur (515) de forme complémentaire à la zone de cylindre (41) dans laquelle la zone de cylindre (41) est située lorsque la première et la seconde tubulure d'accouplement (5, 6) sont reliées et dans lequel l'au moins un verrou (53) est pourvu d'une partie réceptrice d'entraîneur (531) dans laquelle la zone de cylindre (41) est située lorsque la première et la seconde tubulures d'accouplement (5, 6) sont reliées et par le biais de laquelle le verrou (53) peut être déplacé dans le sens opposé à la direction de fermeture.

14. Volet de fermeture (2, 3) pour un dispositif selon l'une des revendications 1 à 13, lequel volet de fermeture (2, 3) comprend un plateau (22, 32) et au moins un tourillon (21, 31) disposé radialement sur le plateau (22, 32) et servant au montage pivotant du volet de fermeture (2, 3), lequel tourillon est fixé de manière amovible sur le plateau (22, 32) et comprend une tige (218), le plateau (22, 32) comprenant au moins une partie réceptrice (225, 325), et un moyen pour relier deux volets de fermeture (2, 3) contigus, et la partie réceptrice (225, 325) comprenant un trou pour tige (227) de forme essentiellement complémentaire à la tige (218) qui est formé de manière à ce que sa paroi entoure la tige (218) dans sa direction circonférentielle lorsque la tige (218) est introduite dans le trou pour tige (227), **caractérisé par le fait que** l'au moins un tourillon respectif (21, 31) est disposé radialement sur le plateau (22, 32) de manière à ce que l'axe de pivotement commun soit situé dans le plan dans lequel les deux plateaux (22, 32) sont contigus lorsque les deux volets de fermeture (2, 3) sont contigus et **par le fait que** le trou pour tige (227) est formé de manière à ce que sa paroi entoure la tige introduite (218) par conjugaison de forme dans sa direction circonférentielle.
